# EUROPEAN PATENT SPECIFICATION

(11) **EP 3 052 560 B1**
(45) Date of publication and mention of the grant of the patent: **05.12.2018**
(21) Application number: 14781408.1
(22) Date of filing: 25.09.2014
(51) Int. Cl.: C08K 3/08, C08K 3/22, C08K 5/00, C08K 5/101, C08K 5/103, C08K 5/1515, C08L 27/06

(54) **BIOPLASTICIZERS AND PLASTICIZED POLYMERIC COMPOSITIONS**
BIOWEICHMACHER UND WEICHGEMACHTE POLYMERZUSAMMENSETZUNGEN
BIOPLASTIFIANTS ET COMPOSITIONS POLYMÈRES PLASTIFIÉES

(30) Priority: 02.10.2013 US 201361885549 P
(43) Date of publication of application: 10.08.2016
(73) Proprietor: Dow Global Technologies LLC, Midland, MI 48674 (US)
(72) Inventor: NEESE, Bret P., North Wales, PA 19454 (US); CHAUDHARY, Bharat I., Princeton, NJ 08540 (US); CHIN, Norman M., Somerville, NJ 08876 (US); LEE, Day-Chyuan, Dolyestown, PA 18901 (US)
(74) Representative: Boult Wade Tennant LLP
(86) International application number: PCT/US2014/057387
(87) International publication number: WO 2015/050766

(56) References cited:
- WO-A1-01/36530
- GB-A- 1 574 317
- US-A- 4 670 494

## Description

### REFERENCE TO RELATED APPLICATIONS

The present application claims the benefit of U.S. Provisional Application No. 61/885,549, filed on October 2, 2013.

### FIELD

Various embodiments of the present invention relate to bioplasticizers and plasticized polymeric compositions.

### INTRODUCTION

Plasticizers are compounds or mixtures of compounds that are added to polymer resins that can lower the modulus and tensile strength, and increase flexibility, elongation, impact strength, and tear strength of the resin (typically a thermoplastic polymer) to which they are added. A plasticizer may also lower the glass transition temperature of the polymer resin, which enhances processability of the polymer resin.

Phthalic acid diesters (also known as "phthalates") are commonly used as plasticizers in many flexible polymer products, such as polymer products formed from polyvinyl chloride ("PVC") and other vinyl polymers. Examples of phthalate plasticizers include diisononyl phthalate, diallyl phthalate, di-2-ethylhexyl-phthalate, dioctyl phthalate, and diisodecyl phthalate.

Phthalate plasticizers have recently come under intense scrutiny by public interest groups concerned about the negative environmental impact of phthalates and potential adverse health effects in humans exposed to phthalates. Accordingly, suitable replacements for phthalate plasticizers are desired.

WO 01/36530 relates generally to flame and smoke resistant compositions.

US 4,670,494 relates to a flame retardant low smoke poly(vinyl chloride) thermoplastic composition.

GB 1,574,317 relates to smoke-retardant plasticized polyvinyl halide polymer compositions containing zinc oxide as the smoke retardant.

### SUMMARY

One embodiment is a polymeric composition, comprising:
(a) a vinyl chloride resin;
(b) a bioplasticizer; and
(c) antimony trioxide,
wherein said antimony trioxide comprises arsenic in an amount of 300 ppm or less based on the entire weight of said antimony trioxide,
wherein said antimony trioxide comprises lead in an amount of 410 ppm or less based on the entire weight of said antimony trioxide,
wherein said antimony trioxide comprises iron in an amount of 10 ppm or less based on the entire weight of said antimony trioxide;
wherein said polymeric composition comprises arsenic in an amount of 9 ppm or less, lead in an amount of 12.3 ppm or less, and iron in an amount of 0.3 ppm or less, based on the entire weight of said polymeric composition

### DETAILED DESCRIPTION

Various embodiments of the present invention concern polymeric compositions comprising a vinyl chloride resin, a bioplasticizer, and a high-purity antimony trioxide (Sb₂O₃). Such compositions can be employed in making various articles of manufacture, such as in jackets or coatings for wire and cable applications.

### Vinyl Chloride Resins

The vinyl chloride resin (also referred to as a vinyl chloride polymer) component of the present compositions is a solid, high-molecular-weight polymer that may be a polyvinyl-chloride homopolymer or an interpolymer of vinyl chloride having copolymerized units of one or more additional comonomers. As used herein, "polymer" means a macromolecular compound prepared by reacting (i.e., polymerizing) monomers of the same or different type. "Polymer" includes homopolymers and interpolymers. As used herein, "homopolymer" denotes a polymer comprising repeating units derived from a single monomer type, but does not exclude residual amounts of other components used in preparing the homopolymer. "Interpolymer" means a polymer prepared by the polymerization of at least two different types of monomers. This generic term includes copolymers, usually employed to refer to polymers prepared from two different monomer types, and polymers prepared from more than two different monomer types, e.g., terpolymers (three different monomer types), tetrapolymers (four different monomer types), etc.

When present, comonomers can account for up to 20 weight percent ("wt%") of the copolymer. Examples of suitable comonomers include C₂-C₆ (i.e., having from 2 to 6 carbon atoms) olefins, for example ethylene and propylene; vinyl esters of straight chain or branched C₂-C₄ carboxylic acids, such as vinyl acetate, vinyl propionate, and vinyl 2-ethyl hexanoate; vinyl halides, for example vinyl fluoride, vinylidene fluoride or vinylidene chloride; vinyl ethers, such as vinyl methyl ether and butyl vinyl ether; vinyl pyridine; unsaturated acids, for example maleic acid, fumaric acid, methacrylic acid and their mono- or diesters with C₁-C₁₀ mono- or dialcohols; maleic anhydride, maleic acid imide as well as the N-substitution products of maleic acid imide with aromatic, cycloaliphatic and optionally branched aliphatic substituents; acrylonitrile and styrene. Graft copolymers of vinyl chloride are also suitable for use in the compositions. For example, ethylene copolymers, such as ethylene vinyl acetate, and ethylene copolymer elastomers, such as EPDM (copolymers comprising copolymerized units of ethylene, propylene and dienes) and EPR (copolymers comprising copolymerized units of ethylene and propylene) that are grafted with vinyl chloride may be used as the vinyl chloride resin component.

A commercially available example of a PVC homopolymer is Oxy Vinyls 240F, available from Oxy Vinyls, LP.

The polymeric compositions can comprise the vinyl chloride resins in an amount ranging from 30 to 80 wt%, from 40 to 75 wt%, from 50 to 70 wt%, or from 55 to 65 wt% based on the entire weight of the polymeric composition.

### Bioplasticizers

A "plasticizer" is a substance that lowers the modulus and tensile strength, and increases flexibility, elongation, impact strength, and tear-strength of a resin to which it is added. A plasticizer may also lower the melting point of the resin, lower the glass transition temperature and enhance processability of the resin to which it is added.

Bioplasticizers are plasticizers that are derived from renewable, natural raw materials, such as plant oils. The compositions can include a single bioplasticizer or a blend of two or more bioplasticizers. U.S. Patent Application Publication No. 2010/0010127 describes bioplasticizers and methods of their production.

Epoxidized vegetable oils, such as epoxidized soybean oil and epoxidized linseed oil, are examples of bioplasticizers that can be included in the present polymeric compositions. For the purposes of this disclosure, a plasticizer is epoxidized if it contains at least one epoxide group. An "epoxide group" is a three-membered cyclic ether (also called oxirane or an ethylene oxide) in which an oxygen atom is joined to each of two carbon atoms that are already bonded to each other. A commercially available epoxidized soybean oil suitable for use herein is PLAS-CHEK™ 775, available from Ferro Corporation.

Epoxidized esters of vegetable-oil-derived fatty acids, such as epoxidized fatty acid methyl esters, are other examples of suitable bioplasticizers. Fatty acid esters can be derived from the reaction of an alcohol with fatty acids derived from renewable sources, such as plant oils. Epoxidized soybean fatty acid esters are an example of a suitable bioplasticizer belonging to this group.

Acetylated waxes and oils are another class of bioplasticizers that can be included in the present compositions. The acetylated waxes and oils may be derived from plants. Furthermore, the acetylated wax may be liquid at a temperature of 25°C, even though the starting wax might have a higher melting point. Acetylated castor wax is an example of one suitable acetylated wax. Acetylated castor oil is an example of one suitable acetylated oil. Commercially available acetylated castor waxes, oils and other derivatives include FLEXRICIN® P-8 and PARICIN® 8, available from Vertellus Specialties, Inc. and Grindsted Soft-N-Safe, available from Danisco (Du Pont).

One or more bioplasticizers may be used as primary plasticizers in the present compositions. For the purposes of this disclosure, plasticizers are primary plasticizers if they have sufficient miscibility or compatibility in the resin composition that they can be the majority, or even the sole, plasticizers in the composition. Thus, in some embodiments, bioplasticizers account for at least 50 percent by weight of the total plasticizer in the composition. In some embodiments of the compositions, bioplasticizers account for at least 90 percent by weight of the total plasticizer in the composition. In still other embodiments, bioplasticizers constitute the entirety of the total plasticizer in the composition.

Epoxidized derivatives of vegetable oils, acetylated derivatives of vegetable oils and mixtures thereof are particularly useful as bioplasticizers. In one or more embodiments, the plasticizer employed in the polymeric composition comprises a combination of an epoxidized vegetable oil (e.g., epoxidized soybean oil) and an acetylated wax (e.g., acetylated castor wax). In various embodiments, the plasticizer consists of an epoxidized soybean oil and an acetylated castor wax.

The compositions can contain significant quantities of the bioplasticizers. For example, in some embodiments, the compositions can include 5 to 60 wt% bioplasticizer, based on the total weight of the composition. This includes embodiments in which the composition includes 7 to 50 wt% bioplasticizer, based on the total weight of the composition, and further includes an embodiment in which the composition includes 10 to 40 wt% bioplasticizer, based on the total weight of the composition. Still further embodiments include those in which the composition includes 20 to 30 wt% bioplasticizer based on the total weight of the composition.

In some embodiments, the compositions are free of plasticizers derived from petrochemicals, such as phthalates, trimetallitates, and adipic polyesters. The term "phthalate-free composition," as used herein, is a composition that is devoid of phthalate. A "phthalate," is a compound which includes the following structure (I): 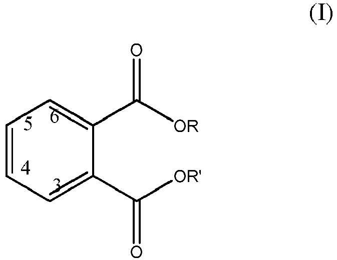 wherein R and R' may be the same or different. Each of R and R' is selected from a substituted-/unsubstituted-hydrocarbyl group having 1 to 20 carbon atoms. As used herein, the term "hydrocarbyl" and "hydrocarbon" refer to substituents containing only hydrogen and carbon atoms, including branched or unbranched, saturated or unsaturated, cyclic, polycyclic, fused, or acyclic species, and combinations thereof. Non-limiting examples of hydrocarbyl groups include alkyl, cycloalkyl, alkenyl, alkadienyl, cycloalkenyl, cycloalkadienyl, aryl, aralkyl, alkylaryl, and alkynyl groups. Each position 3, 4, 5, and 6 may be populated by hydrogen or another moiety.

In some embodiments the compositions are substantially free of non-bioplasticizers. A composition is considered to be substantially free of non-biochemical plasticizers if the composition is free of non-biochemical plasticizer, or if the amount of non-biochemical plasticizer present in the composition is considered inconsequential to the efficacy of the composition.

### High-Purity Antimony Trioxide

As noted above, a high-purity antimony trioxide (Sb₂O₃) is employed in the polymeric compositions described herein. As used herein, a "high-purity" antimony trioxide contains arsenic in an amount of 300 ppm or less, lead in an amount of 410 ppm or less, and iron in an amount of 10 ppm or less, based on the entire weight of the antimony trioxide. In various embodiments, the high-purity antimony trioxide contains arsenic in an amount of less than 300 ppm, less than 170 ppm, less than 150 ppm, less than 100 ppm, or less than 50 ppm, based on the entire weight of the antimony trioxide. In one or more embodiments, the high-purity antimony trioxide contains lead in an amount of less than 410 ppm, less than 300 ppm, less than 170 ppm, or less than 10 ppm, based on the entire weight of the antimony trioxide. In various embodiments, the high-purity antimony trioxide contains iron in an amount of less than 10 ppm, less than 7 ppm, or less than 3 ppm, based on the entire weight of the antimony trioxide.

In one or more embodiments, the polymeric composition can comprise the high-purity antimony trioxide in an amount ranging from 1 to 7 wt%, or from 2 to 5 wt%, based on the entire weight of the polymeric composition. In additional embodiments, the polymeric composition can comprise the high-purity antimony trioxide in an amount ranging from 3 to 10 parts per hundred resin ("phr"), or from 4 to 6 phr based on 100 weight parts of the vinyl chloride resin.

The polymeric composition contains arsenic in an amount of 9 ppm or less, lead in an amount of 12.3 ppm or less, and iron in an amount of 0.3 ppm or less, based on the entire weight of the polymeric composition.

Though not wishing to be bound by theory, it is thought that employing an antimony trioxide having low concentrations of arsenic, lead, and iron in combination with a bioplasticizer in vinyl chloride resin compositions provides a polymeric composition having improved wet electrical insulation resistance ("wet IR"), particularly upon aging. In various embodiments, the polymeric composition can exhibit a loss of wet IR from 10 weeks of aging to 36 weeks of aging of less than 30 %, less than 25 %, less than 20 %, less than 17 %, less than 15 %, or 14 % or less. Procedures for determining wet IR and aging conditions are described in the Test Methods section, below. Additionally, in various embodiments, the polymeric composition can have a wet IR after aging for 36 weeks of at least 0.35 Mohms / 304.8 m (1,000 ft), at least 0.38 Mohms / 304.8 m (1,000 ft), at least 0.40 Mohms / 304.8 m (1,000 ft), or at least 0.42 Mohms / 304.8 m (1,000 ft).

### Filler and Additives

In an embodiment, the polymeric composition includes a heat stabilizer. Non-limiting examples of suitable heat stabilizers include lead-free mixed-metal heat stabilizers, lead stabilizers, organic heat stabilizers, epoxides, salts of monocarboxylic acids, phenolic antioxidants, organic phosphites, hydrotalcites, zeolites, perchlorates and/or betadiketones. Non-limiting examples of suitable betadiketones are dibenzoylmethane, palmitoyl benzoyl methane, stearoyl benzoyl methane and mixtures thereof. A non-limiting example of suitable dibenzoylmethane is Rhodiastab® 83. A non-limiting example of suitable mixtures of palmitoyl benzoyl methane and stearoyl benzoyl methane is Rhodiastab® 50. Non-limiting examples of suitable lead-free mixed metal heat stabilizers include Mark® 6797, Mark® 6776 ACM, Mark® 6777 ACM, Therm-Chek® RC215P, Therm-Chek® 7208, Naftosafe® EH-314, Baeropan® MC
90400 KA, Baeropan® MC 90400 KA/1, Baeropan® MC8553 KA-ST 3-US, Baeropan® MC 9238 KA-US, Baeropan® MC 90249 KA, and Baeropan® MC 9754 KA. The heat stabilizer or heat stabilizers may be added to the bioplasticizer of this disclosure. Heat stabilizers can be used in amounts of 0.1 to 10 wt % based on the weight of the polymeric composition.

Clays can also be employed in the polymeric compositions described herein. The clays that can be used in the practice of this invention are calcined and can be treated or not treated. Calcined clay is clay that has been treated, e.g., heated, to drive off volatile compounds. Representative clays include, but are not limited to montmorillonite, nontronite, beidellite, volkonskoite, hectorite, saponite, sauconite; vermiculite; halloisite; sericite; or their mixtures. Treated or untreated, calcined montmorillonite is preferred. The various CLOISITE clays are representative of the treated montmorillonite clays that can be used in the practice of this invention. The clay can be used in amounts ranging from 1 to 14 wt%, from 3 to 10 wt%, or from 5 to 8 wt%, based on the total weight of the polymeric composition.

The polymeric compositions can additionally contain other fillers and additives. If present, other useful fillers include silica, titanium dioxide, talc, and other like mineral fillers. The compositions can additionally contain other compounding ingredients such as light stabilizers, blowing agents, lubricants, pigments, colorants, processing aids, antioxidants, crosslinking agents, flame-retardants, anti-drip agents, curing agents, boosters and retardants, coupling agents, antistatic agents, nucleating agents, slip agents, viscosity control agents, tackifiers, anti-blocking agents, surfactants, extender oils, acid scavengers, metal deactivators, and the like. The use of such additional components permits the compositions to be tailored for use in various applications. Particularly useful compounding ingredients include tin, barium/zinc and calcium/zinc thermal stabilizers. If additives and other fillers are present, they typically account for no greater than about 15 weight percent of the polymeric composition, based on the total weight of the composition. This includes compositions that include no greater than 10, and no greater than 5, and no greater than 2, and no greater than 1, weight percent additives and other fillers, based on the total weight of the composition.

### Compounding

The polymeric compositions are generally prepared according to conventional dry-blend or wet-blend methods known to those skilled in the art of PVC compounding. The mixtures obtained from the blending process can be further compounded with a mixer such as a Banbury batch mixer, a Farrel Continuous Mixer, or a single or twin screw extruder.

In an embodiment, the present polymeric composition can be made by absorption of the biochemical plasticizers in vinyl chloride resin powder to make a dry blend. Any suitable method/apparatus may be used to make the dry blend including, but not limited to, a Brabender mixer, a Henschel mixer or a ribbon blender. The polymeric composition may contain other additives in addition to the vinyl chloride resin and the biochemical plasticizer. The dry blend may then be further compounded (via melt extrusion for example) and formed into any desired shape (film, pellet, etc.).

### Articles

Another aspect of the invention provides articles, such as molded or extruded articles, comprising one or more of the polymeric compositions described above.

Articles include wire and cable jackets and insulation. Thus, in some embodiments, the article includes a metal conductor and a coating on the metal conductor to provide an "insulated" wire capable of electrical transmission. A "metal conductor," as used herein, is at least one metal component used to transmit either electrical power and/or electrical signals. Flexibility of wire and cables is often desired, so the metal conductor can have either a solid cross-section or can be composed of smaller wire strands that provide increased flexibility for the given overall conductor diameter. Cables are often composed of several components, such as multiple insulated wires formed into an inner core, and then surrounded by a cable sheathing system providing protection and cosmetic appearance. The cable sheathing system can incorporate metallic layers, such as foils or armors, and typically has a polymer layer on the surface. The one or more polymer layers incorporated into the protective/cosmetic cable sheathing are often referred to as cable "jacketing." For some cables, the sheathing is only a polymeric jacketing layer surrounding a cable core. There are also some cables having a single layer of polymer surrounding the conductors, performing both the roles of insulation and jacketing. The present compositions may be used as, or in, the polymeric components in a full range of wire and cable products, including power cables and both metallic and fiber optic communication applications.

### TEST METHODS

### Wet Insulation Resistance

Three wire specimens of 3.05 m (10 feet) effective measurement length (4.27 m (14 feet) total length with 0.61 m (2 feet) on each end outside of the water) for each sample are measured in long-term 75 °C wet IR as specified by Underwriters Laboratories ("UL") standard 83. The aging voltage is 600 V AC and the measurement voltage is 500 V DC, applied for 60 seconds.

### MATERIALS

The following materials are employed in the Examples, below.

The polyvinyl chloride ("PVC") employed is OXYVINYLS™ 240F, a PVC homopolymer prepared by suspension polymerization, which has an inherent viscosity ranging from 1.00 to 1.04 dl/g, a relative viscosity ranging from 2.32 to 2.41, a K value of 68 to 70, and is available from Oxy Vinyls LP, Dallas, TX, USA.

The acetylated castor wax ("ACW") is castor wax (also known as hydrogenated castor oil) that has been subjected to an acetylation reaction and has the following properties: Density (g/cc) at 25°C = 0.953; Acid number (mg KOH/g) = 2.0; Iodine value (g I₂/100g) = 0.7; Hydroxyl Number (mg KOH/g) = 0.0; Viscosity (mPa s) @ 25°C = 349; Water content (wt%) = 0.096; and Color = 215 APHA.

PLAS-CHEK™ 775 is an epoxidized soybean oil having a specific gravity of 0.992, an APHA color value of 110, a pour point of -3.89°C (25 °F), and is available from Ferro Corporation, Mayfield Heights, OH, USA.

SATINTONE™ SP-33 is a calcined kaolin clay typically having a GE brightness of 85 %, an average particle size of 1.3 µm, a pH level of 6, and is available from BASF SE, Ludwigshafen, Germany.

BAEROPAN™ MC 90249 KA is a lead-free calcium/zinc mixed-metal heat stabilizer available from Baerlocher Production USA, Cincinnati, OH, USA.

IRGANOX™ 1076 is an antioxidant with the chemical name octadecyl 3-(3,5-di-tert-butyl-4-hydroxyphenyl)propionate, and is available from BASF SE, Ludwigshafen, Germany.

MICROFINE™ AO9 is an antimony trioxide available from Chemtura Corporation, Philadelphia, PA, USA.

AMSPEC™ SP is a high-purity antimony trioxide available from Amspec Chemical Corporation, Bear, DE, USA.

AMSPEC™ Select is a high-purity antimony trioxide available from Amspec Chemical Corporation, Bear, DE, USA.

REDSTAR™ is a high-purity antimony trioxide available from Chemtura Corporation, Philadelphia, PA, USA..

PETCAT™ R9 is a high-purity antimony trioxide available from Chemtura Corporation, Philadelphia, PA, USA.

### EXAMPLES

### Example 1 - Wet IR

Prepare one Comparative Sample (CS1) and four Samples (S1-S4) according to the formulations provided in Table 1, below.

**Table 1 - Compositions of CS1 and S1-S4**

| | **CS1** | **S1** | **S2** | **S3** | **S4** |
|---|---|---|---|---|---|
| **PVC (wt%)** | 61.3 | 61.3 | 61.3 | 61.3 | 61.3 |
| **Acetylated Castor Wax (wt%)** | 13.0 | 13.0 | 13.0 | 13.0 | 13.0 |
| **Plas-Chek™ 775 (wt%)** | 13.0 | 13.0 | 13.0 | 13.0 | 13.0 |
| **Satintone™ Sp-33 (wt%)** | 6.4 | 6.4 | 6.4 | 6.4 | 6.4 |
| **Baeropan™ MC 90249 KA (wt%)** | 3.0 | 3.0 | 3.0 | 3.0 | 3.0 |
| **Irganox™ 1076 (wt%)** | 0.3 | 0.3 | 0.3 | 0.3 | 0.3 |
| **Microfine™ AO9 Sb₂O₃ (wt%)** | 3.0 | - | - | - | - |
| **Amspec™ SP Sb₂O₃ (wt%)** | - | 3.0 | - | - | - |
| **Amspec™ Select Sb₂O₃ (wt%)** | - | - | 3.0 | - | - |
| **Redstar™ Sb₂O₃ (wt%)** | - | - | - | 3.0 | - |
| **PetCat™ R9 Sb₂O₃ (wt%)** | - | - | - | - | 3.0 |

In preparing the formulations shown in Table 1, heat the acetylated castor wax and the Plas-Chek™ 775 at 60 °C for a minimum of 1 hour. Then shake and combine the two components to make the plasticizer mixture. Prepare a solids mixture mixing all components except the plasticizer, clay, and Sb₂O₃ in a container by hand. A 250-cm³ Brabender mixing bowl with sigma blades is used at 90 °C and 40 rpm to mix the dry blend. The mixer is first preheated for 2 minutes, then the solids mixture is added and mixed for 60 seconds. The plasticizer is then added and mixed for 10 minutes. The clay and Sb₂O₃ is then added and mixed for 60 seconds. The mixer is then stopped and the dry blend removed.

The dry blend is then melt mixed in a 250-cm³ Brabender mixing bowl with cam rotors at 40 rpm. The dry blend is added to the mixer and mixed at 180 °C for 10 minutes from the time of loading.

The compound is then pelletized in a conical twin-screw extruder with a temperature profile of 160, 165, 170, 175°C and at 45 rpm. A 15-second transition is employed between samples, and the extruder is run dry between samples.

Following formula preparation, prepare sample wires using a Brabender extruder with a 25:1 single-screw extruder and mini wire line. The extruder is set at 40 rpm and a temperature profile of 170, 175, 180, 185 °C. The conductor is a 0.16 cm (0.064") (14 AWG) solid copper conductor and the insulation thickness is approximately 0.04 cm (0.015"). The conductor is preheated with hot air guns and 30.48 m (100 feet) of coated wire is collected.

Analyze each of the foregoing samples according to the Wet IR test procedure described above. The results of the analyses are provided in Table 2, below, which are averages of three specimens. Table 2 additionally provides the arsenic, lead, and iron contents of each of the antimony trioxide grades used.

**Table 2 - Wet IR Properties of CS1 and S1-S4**

| | **CS1** | **S1** | **S2** | **S3** | **S4** |
|---|---|---|---|---|---|
| **Impurity Levels in Antimony Trioxide** | | | | | |
| **Sb₂O₃ Grade** | AO9 | Amspec SP | Amspec Select | Redstar | PetCat R9 |
| **As (ppm in Sb₂O₃)** | 500 | 4 | 170 | 300 | 140 |
| **Pb (ppm in Sb₂O₃)** | 600 | 7 | 410 | 0.0 | 160 |
| **Fe (ppm in Sb₂O₃)** | 30 | 2 | 6 | 30 | 10 |

| **Wet IR** | | | | | |
|---|---|---|---|---|---|
| **Wet IR at 1 week (Mohms / 304.8 m (1,000 ft))** | 0.79 | 1.26 | 1.53 | 1.41 | 1.53 |
| **Wet IR at 10 weeks (Mohms / 304.8 m (1,000 ft))** | 0.40 | 0.48 | 0.52 | 0.47 | 0.50 |
| **Wet IR at 30 weeks (Mohms /304.8 m (1,000 ft))** | 0.28 | 0.45 | 0.48 | 0.32 | 0.47 |
| **Wet IR at 36 weeks (Mohms / 304.8 m (1,000 ft))** | 0.25 | 0.42 | 0.45 | 0.35 | 0.43 |
| **Wet IR Loss from 10 to 36 weeks** | 37.5 % | 12.5 % | 13.5 % | 25.5 % | 14.0 % |

As can be seen from the results provided in Table 2, after an initial decrease in wet IR from 1 to 10 weeks for all samples, the four samples containing high-purity antimony trioxide maintained their wet IR better than the comparative sample containing antimony trioxide having higher levels of arsenic, lead, and iron.

## Claims

1. A polymeric composition, comprising:
(a) a vinyl chloride resin;
(b) a bioplasticizer; and
(c) antimony trioxide,
wherein said antimony trioxide comprises arsenic in an amount of 300 ppm or less based on the entire weight of said antimony trioxide,
wherein said antimony trioxide comprises lead in an amount of 410 ppm or less based on the entire weight of said antimony trioxide,
wherein said antimony trioxide comprises iron in an amount of 10 ppm or less based on the entire weight of said antimony trioxide; and
wherein said polymeric composition comprises arsenic in an amount of 9 ppm or less, lead in an amount of 12.3 ppm or less, and iron in an amount of 0.3 ppm or less, based on the entire weight of said polymeric composition.

2. The polymeric composition of claim 1, wherein said polymeric composition exhibits a loss in wet insulation resistance of less than 30 % between 10 weeks of aging and 36 weeks of aging when analyzed according to UL standard 83.

3. The polymeric composition of any one of the foregoing claims, wherein said polymeric composition has a wet IR of at least 0.35 Mohms / 304.8 m (1,000 feet) after 36 weeks of aging when analyzed according to UL standard 83.

4. The polymeric composition of any one of the foregoing claims, wherein said bioplasticizer is selected from the group consisting of epoxidized natural oils, epoxidized fatty acid alkyl esters, acetylated waxes or oils, and combinations of two or more thereof.

5. The polymeric composition of any one of the foregoing claims, wherein said bioplasticizer comprises an epoxidized soybean oil and an acetylated castor wax.

6. The polymeric composition of any one of the foregoing claims, wherein said antimony trioxide is present in an amount ranging from 1 to 7 wt% based on the entire polymeric composition weight; wherein said bioplasticizer is present in an amount ranging from 5 to 60 wt% based on the entire polymeric composition weight; wherein said vinyl chloride resin is present in an amount ranging from 30 to 80 wt% based on the entire polymeric composition weight.

7. The polymeric composition of any one of the foregoing claims, wherein said vinyl chloride resin is a polyvinyl chloride homopolymer.

8. A sheath for a wire or cable, wherein said sheath is at least partially made from the polymeric composition of any one of the foregoing claims.

9. A wire or cable comprising the sheath of claim 8.

## Patentansprüche

1. Eine Polymerzusammensetzung, die Folgendes beinhaltet:
(a) ein Vinylchloridharz;
(b) einen Bioweichmacher; und
(c) Antimontrioxid,
wobei das Antimontrioxid Arsen in einer Menge von 300 ppm oder weniger, bezogen auf das Gesamtgewicht des Antimontrioxids, beinhaltet,
wobei das Antimontrioxid Blei in einer Menge von 410 ppm oder weniger, bezogen auf das Gesamtgewicht des Antimontrioxids, beinhaltet,
wobei das Antimontrioxid Eisen in einer Menge von 10 ppm oder weniger, bezogen auf das Gesamtgewicht des Antimontrioxids, beinhaltet; und
wobei die Polymerzusammensetzung Arsen in einer Menge von 9 ppm oder weniger, Blei in einer Menge von 12,3 ppm oder weniger und Eisen in einer Menge von 0,3 ppm oder weniger, bezogen auf das Gesamtgewicht der Polymerzusammensetzung,
beinhaltet.

2. Polymerzusammensetzung gemäß Anspruch 1, wobei die Polymerzusammensetzung zwischen 10 Alterungswochen und 36 Alterungswochen einen Verlust des Nass-Isolationswiderstands von weniger als 30 % aufweist, wenn nach UL-Standard 83 analysiert.

3. Polymerzusammensetzung gemäß einem der vorhergehenden Ansprüche, wobei die Polymerzusammensetzung einen Nass-IW von mindestens 0,35 MOhm/304,8 m (1000 Fuß) nach 36 Alterungswochen aufweist, wenn nach UL-Standard 83 analysiert.

4. Polymerzusammensetzung gemäß einem der vorhergehenden Ansprüche, wobei der Bioweichmacher ausgewählt ist aus der Gruppe, die aus epoxidierten Naturölen, epoxidierten Fettsäurealkylestern, acetylierten Wachsen oder Ölen und Kombinationen von zwei oder mehr davon besteht.

5. Polymerzusammensetzung gemäß einem der vorhergehenden Ansprüche, wobei der Bioweichmacher ein epoxidiertes Sojabohnenöl und ein acetyliertes Rizinuswachs beinhaltet.

6. Polymerzusammensetzung gemäß einem der vorhergehenden Ansprüche, wobei das Antimontrioxid in einer Menge im Bereich von 1 bis 7 Gew.-%, bezogen auf das Gesamtgewicht der Polymerzusammensetzung, vorliegt; wobei der Bioweichmacher in einer Menge im Bereich von 5 bis 60 Gew.-%, bezogen auf das Gesamtgewicht der Polymerzusammensetzung, vorliegt; wobei das Vinylchloridharz in einer Menge im Bereich von 30 bis 80 Gew.-%, bezogen auf das Gesamtgewicht der Polymerzusammensetzung, vorliegt.

7. Polymerzusammensetzung gemäß einem der vorhergehenden Ansprüche, wobei das Vinylchloridharz ein Polyvinylchloridhomopolymer ist.

8. Eine Umhüllung für einen Draht oder ein Kabel, wobei die Umhüllung mindestens teilweise aus der Polymerzusammensetzung gemäß einem der vorhergehenden Ansprüche gefertigt ist.

9. Ein Draht oder Kabel, der oder das die Umhüllung gemäß Anspruch 8 beinhaltet.

## Revendications

1. Une composition polymère, comprenant :
(a) une résine de chlorure de vinyle ;
(b) un bioplastifiant; et
(c) du trioxyde d'antimoine,
dans laquelle ledit trioxyde d'antimoine comprend de l'arsenic dans une quantité de 300 ppm ou moins rapporté au poids entier dudit trioxyde d'antimoine,
dans laquelle ledit trioxyde d'antimoine comprend du plomb dans une quantité de 410 ppm ou moins rapporté au poids entier dudit trioxyde d'antimoine,
dans laquelle ledit trioxyde d'antimoine comprend du fer dans une quantité de 10 ppm ou moins rapporté au poids entier dudit trioxyde d'antimoine ; et
ladite composition polymère comprenant de l'arsenic dans une quantité de 9 ppm ou moins, du plomb dans une quantité de 12,3 ppm ou moins, et du fer dans une quantité de 0,3 ppm ou moins, rapporté au poids entier de ladite composition polymère.

2. La composition polymère de la revendication 1, ladite composition polymère présentant une perte de résistance d'isolation à l'humidité de moins de 30 % entre 10 semaines de vieillissement et 36 semaines de vieillissement lorsqu'elle est analysée selon la norme UL 83.

3. La composition polymère de l'une quelconque des revendications précédentes, ladite composition polymère ayant une RI à l'humidité d'au moins 0,35 Mohm / 304,8 m (1 000 pieds) après 36 semaines de vieillissement lorsqu'elle est analysée selon la norme UL 83.

4. La composition polymère de l'une quelconque des revendications précédentes, dans laquelle ledit bioplastifiant est sélectionné dans le groupe constitué d'huiles naturelles époxydées, d'esters alkyliques d'acides gras époxydés, de cires ou huiles acétylées, et de combinaisons de deux de ceux-ci ou plus.

5. La composition polymère de l'une quelconque des revendications précédentes, dans laquelle ledit bioplastifiant comprend une huile de soja époxydée et une cire de ricin acétylée.

6. La composition polymère de l'une quelconque des revendications précédentes, dans laquelle ledit trioxyde d'antimoine est présent dans une quantité comprise dans la gamme allant de 1 à 7 % en poids rapporté au poids entier de la composition polymère ; dans laquelle ledit bioplastifiant est présent dans une quantité comprise dans la gamme allant de 5 à 60 % en poids rapporté au poids entier de la composition polymère ; dans laquelle ladite résine de chlorure de vinyle est présente dans une quantité comprise dans la gamme allant de 30 à 80 % en poids rapporté au poids entier de la composition polymère.

7. La composition polymère de l'une quelconque des revendications précédentes, dans laquelle ladite résine de chlorure de vinyle est un homopolymère de chlorure de polyvinyle.

8. Une gaine pour un fil électrique ou câble, ladite gaine étant au moins en partie réalisée à partir de la composition polymère de l'une quelconque des revendications précédentes.

9. Un fil électrique ou câble comprenant la gaine de la revendication 8.
